Europäisches Patentamt

(19) European Patent Office

Office européen des brevets

(11) Publication number: **0 294 487**
**A1**

## (12) EUROPEAN PATENT APPLICATION
published in accordance with Art. 158(3) EPC

(21) Application number: 88900108.7

(22) Date of filing: 15.12.87

Data of the international application taken as a basis:

(86) International application number:
PCT/JP87/00982

(87) International publication number:
WO88/04809 (30.06.88 88/14)

(51) Int. Cl.³: **G 06 F 15/16**

(30) Priority: 23.12.86 JP 3072/86

(43) Date of publication of application:
14.12.88 Bulletin 88/50

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: KURAKAKE, Mitsuo
Izumi-haitsu 103 3-3-10, Tamadaira
Hino-shi, Tokyo 191(JP)

(72) Inventor: KINOSHITA, Jiro
252, Simotsuruma
Yamato-shi, Kanagawa 242(JP)

(74) Representative: Brunner, Michael John et al,
GILL JENNINGS & EVERY 53-64 Chancery Lane
London WC2A 1HN(GB)

(54) SYSTEM FOR CONTROLLING COPROCESSORS.

(57) A system for controlling coprocessors having a host processor (1) and a coprocessor (4). Provision is made of a program memory (6) for making direct access to the coprocessor (4) and a shared RAM (5) for making access to both the host processor and the coprocessor. The host processor (1) writes onto the shared RAM (5) the operational command and data that are to be processed, and the coprocessor (4) reads the operational command and data, performs the commanded operation using the program memory (6) and writes the arithmetic result onto the shared RAM (5). The host processor reads out the arithmetic result that is written onto the shared RAM (5).

Fig. 1

# D E S C R I P T I O N

## COPROCESSOR CONTROL SYSTEM

### Technical Field

The present invention relates to a coprocessor control system having a host processor and a coprocessor, and more particularly to a coprocessor control system for reducing the burden of data transfer which a host processor effects with a coprocessor.

### Background Art

To speed up a processing time, microprocessor systems widely employ a coprocessor control system which uses a coprocessor to lessen the burden of complex arithmetic processing operation on a host processor, which operation would require a long processing time if carried out by a microprocessor.

Such a coprocessor is sold in the market as a dedicated chip, and employed to reduce the burden on a host processor for thereby allowing the host processor to speed up its processing operation.

A control system such as a robot control apparatus has to execute a complicated arithmetic processing sequence on a on-line basis at all times. In such a control system, processing operation for transferring arithmetic processing commands to be executed by a host processor and data is required at all times and at high speed. If a command and data are transferred to a coprocessor in each arithmetic processing step, then it is difficult to perform actual robot control with accuracy.

## Disclosure of the Invention

It is an object of the present invention to provide a coprocessor control system for reducing the burden of data transfer which a host processor effects with a coprocessor.

In order to solve the aforesaid problems, there is provided in accordance with the present invention a coprocessor control system having a host processor and a coprocessor, comprising a program memory directly accessible by said coprocessor, and a common RAM accessible by said host processor and said coprocessor, the arrangement being such that said host processor writes an arithmetic command to be executed and data into said common RAM, said coprocessor reads said arithmetic command and said data, effects arithmetic operation using said program memory, and writes the result of the processing operation on said arithmetic command into said common RAM, and said host processor reads said result of the processing operation.

The coprocessor has its own program memory. The host processor writes a plurality of arithmetic processing steps to be executed and data required thereby into the common RAM, and notifies the coprocessor of the writing operation. The coprocessor then reads the arithmetic processing steps and data, effects necessary arithmetic processing operation, writes the result of the arithmetic processing operation, and notifies the host processor of the writing operation. Then, the host processor can read the result. Since it is not necessary to transfer a command and data in each arithmetic processing step, the burden on the host processor is lessened.

Brief Description of the Drawings

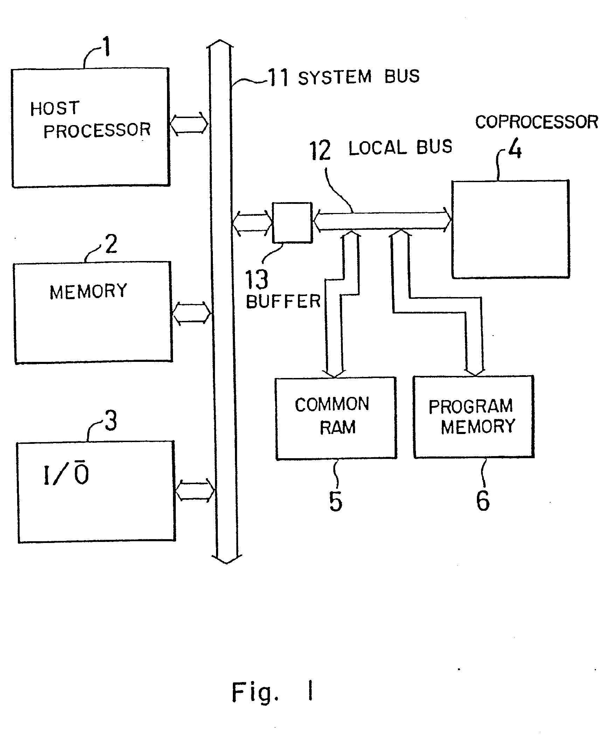

FIG. 1 is a block diagram of the arrangement of an apparatus for carrying out the present invention.

Best Mode for Carrying Out the Invention

An embodiment of the present invention will hereinafter be described in specific detail with reference to the drawings. FIG. 1 is a block diagram of an embodiment according to the present invention. Denoted in FIG. 1 at 1 is a host processor, 2 a memory storing a program, etc., to be executed by the host processor 1, and 3 an interface for transmitting signals to and receiving signals from an external device. The host processor 1, the memory 2, and the interface 3 are connected to a system bus 11.

A coprocessor 4 for executing complex arithmetic processing steps is connected, by a local bus 12, to a program memory 6 used by the coprocessor 4 and a common RAM 5 for transferring arithmetic commands and data therefor to and from the host processor 1. The system bus 11 and the local bus 12 are connected to each other through a buffer 13.

Operation of the embodiment shown in FIG. 1 will be described below. The host processor 1 writes necessary arithmetic processing steps and data required thereby into the common RAM 5. For example, in controlling a robot, the following arithmetic processing step is required on a real-time basis in order to drive a number of movable parts with a plurality of servomotors and control the servomotors:

$$
\begin{pmatrix} Y_1 \\ Y_2 \\ Y_3 \\ \cdot \\ Y_n \end{pmatrix} = \begin{pmatrix} A_{11} & A_{12} & A_{13} & \cdots & A_{1n} \\ A_{21} & A_{22} & A_{23} & \cdots & \cdot \\ A_{31} & \cdot & & & \cdot \\ \cdot & \cdot & \cdot & & \cdot \\ A_{n1} & \cdots & \cdots & \cdot & A_{nn} \end{pmatrix} \begin{pmatrix} X_1 \\ X_2 \\ X_3 \\ \cdot \\ X_n \end{pmatrix}
$$

Where $Y_1 \sim Y_n$ are answers to be sought, $A_{11}, A_{12} \cdots A_{nn}$, and $X_1 \sim X_n$ are data required, $A_{11}, A_{12} \cdots A_{nn}$ in particular being coefficients including trigonometric functions. Therefore, the host processor 1 writes a command for the above matrix arithmetic operation and the data $A_{11}, A_{12} \cdots A_{nn}$ and $X_1 \sim X_n$ into the common memory 5, and notifies the coprocessor of the writing operation.

- 5 -

In response to the notification, the coprocessor performs the above matrix arithmetic operation according to an arithmetic processing program stored in the program memory 6, writes the answers $Y_1 \sim Y_n$ into certain predetermined addresses in the common RAM, and notifies the host processor 1 of the writing operation.

When the host processor 1 is notified of the completion of the arithmetic processing operation from the coprocessor 4, the host processor 1 reads out the answers, thus completing the necessary processing operation.

As described above, since the host processor 1 is not required to transmit and receive an arithmetic command and data in each arithmetic processing step, but can process commands and data in a bunch, the burden on the host processor 1 is reduced. Therefore, the system of the invention can be used in an apparatus, such as a robot control apparatus, which is required to process a number of complex arithmetic operations at high speed on a real-time basis.

While a matrix arithmetic operation has been illustrated above by way of example, the present invention is not limited to the illustrated example, but is applicable to arithmetic processing steps that can be put together in a bunch dependent on a system to be controlled.

With the present invention, as described above, inasmuch as the coprocessor has the common RAM for transfer-

0294487

ring information between the program memory and the host processor, the host processor enables the coprocessor to process arithmetic operations in a bunch. The present invention is useful for processing complex arithmetic operations at high speed on a real-time basis as in a robot control apparatus.

CLAIMS

1. A coprocessor control system having a host processor and a coprocessor, comprising:

a program memory directly accessible by said coprocessor, and a common RAM accessible by said host processor and said coprocessor;

the arrangement being such that said host processor writes an arithmetic command to be executed and data into said common RAM;

said coprocessor reads said arithmetic command and said data;

effects arithmetic operation using said program memory, and writes the result of the processing operation on said arithmetic command into said common RAM; and

said host processor reads said result of the processing operation.

2. A coprocessor control system according to claim 1, wherein said coprocessor accesses the program memory and the common RAM through a local bus.

3. A coprocessor control system according to claim 1, wherein said host processor accesses the common RAM through a system bus, a buffer, and a local bus.

0294487

HOST PROCESSOR — 1

11 SYSTEM BUS

COPROCESSOR

12 LOCAL BUS — 4

MEMORY — 2

13 BUFFER

I/O — 3

COMMON RAM — 5

PROGRAM MEMORY — 6

Fig. 1

# INTERNATIONAL SEARCH REPORT

International Application No  PCT/JP87/00982

**I. CLASSIFICATION OF SUBJECT MATTER** (if several classification symbols apply, indicate all) 3

According to International Patent Classification (IPC) or to both National Classification and IPC

Int.Cl⁴    G06F15/16

**II. FIELDS SEARCHED**

| Minimum Documentation Searched 4 | |
|---|---|
| Classification System | Classification Symbols |
| IPC | G06F15/16, G06F9/38 |

| Documentation Searched other than Minimum Documentation to the Extent that such Documents are Included in the Fields Searched 5 | |
|---|---|
| Jitsuyo Shinan Koho | 1971 - 1986 |
| Kokai Jitsuyo Shinan Koho | 1971 - 1986 |

**III. DOCUMENTS CONSIDERED TO BE RELEVANT 14**

| Category * | Citation of Document, 16 with indication, where appropriate, of the relevant passages 17 | Relevant to Claim No. 18 |
|---|---|---|
| X | JP, A, 61-204758 (Hitachi, Ltd.) 10 September 1986 (10. 09. 86) (Family: none) | 1 |
| X | JP, A, 59-16072 (Digital Equipment Corporation) 27 January 1984 (27. 01. 84) & EP, A2, 92429 & AU, A1, 1349883 & US, A, 4509116 & CA, A1, 1196108 | 1 |
| Y | JP, A, 57-25045 (NEC Corporation) 9 February 1982 (09. 02. 82) (Family: none) | 1 |
| Y | JP, A, 59-220821 (NEC Home Electronics Ltd.) 12 December 1984 (12. 12. 84) (Family: none) | 2, 3 |
| X | JP, A, 59-111563 (Fuji Electric Co., Ltd.) 27 June 1984 (27. 06. 84) (Family: none) | 1 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search 2 | Date of Mailing of this International Search Report 2 |
|---|---|
| March 3, 1988 (03. 03. 88) | March 22, 1988 (22. 03. 88) |
| International Searching Authority 1 | Signature of Authorized Officer 20 |
| Japanese Patent Office | |

Form PCT/ISA/210 (second sheet) (October 1977)